# EUROPÄISCHE PATENTSCHRIFT

(11) **EP 0 392 583 B1**
(45) Veröffentlichungstag und Bekanntmachung des Hinweises auf die Patenterteilung: **28.07.1993**
(21) Anmeldenummer: 90200735.0
(22) Anmeldetag: 28.03.1990
(51) Int. Cl.: E03F 3/06

(54) **Vorrichtung zum unterirdischen Auswechseln schadhafter Abwasser-Sammlerrohre**
Device for replacing damaged sewage pipes
Dispositif pour remplacer des tuyaux d'égout endommagés

(30) Priorität: 13.04.1989 DE 3912103; 31.01.1990 DE 4002752
(43) Veröffentlichungstag der Anmeldung: 17.10.1990
(73) Patentinhaber: NLW Fördertechnik GmbH i.K., D-46509 Xanten (DE)
(72) Erfinder: Mohrmann, Michael, Dipl.-Ing., D-4178 Kevelaer 4 (DE)

(56) Entgegenhaltungen:
- EP-A- 0 158 042
- EP-A- 0 253 588
- WO-A-87/03353
- DE-A- 3 618 963
- DE-A- 3 737 301
- DE-U- 8 607 206
- US-A- 4 507 019

## Beschreibung

Die Erfindung befaßt sich mit dem Auswechseln schadhafter Abwasser-Sammlerrohre von nicht begehbarem Durchmesser, in welche gegebenenfalls Hausanschlußrohre einmünden.

In zunehmendem Maße bedürfen die Abwasserleitungen in Städten und Gemeinden der Erneuerung. Die zum Teil Jahrzehnte alten Abwasserrohre und -kanäle sind durch die aggressiven Abwässer oder durch das Grundwasser chemisch angegriffen oder mechanisch durch Erdverschiebungen oder -stöße infolge von Verkehr, Bauvorhaben o. dgl. gebrochen, so daß das Leitungssystem undicht geworden ist und die Abwässer in das Grundwasser eindringen. Während begehbare Abwasserkanäle von innen her repariert werden können, geschieht das Auswechseln von in der Regel aus Keramik oder Beton bestehenden Abwasser-Sammlerrohren, deren kleiner Durchmesser eine Begehung nicht zuläßt, meist im offenen Grabenbau, wobei die alten Sammlerrohre freigelegt, die neuen Sammlerrohre in der gleichen Trasse verlegt und mit den Hausanschlußrohren verbunden werden. Die offene Grabenbauweise erfordert jedoch große Bauflächen und ist aus verkehrstechnischen Gründen sehr häufig ungeeignet.

Es ist daher bereits vorgeschlagen worden, schadhafte Abwasser-Sammlerrohre, deren Durchmesser eine Begehung nicht zuläßt, unterirdisch auszuwechseln, ohne das Erdreich über der Trasse aufreißen zu müssen. Aus der Literaturstelle "Wasser + Boden", 1987, 556 und der US 45 07 019 ist ein Verfahren bekannt, bei dem von einem Preßschacht aus eine Bohr- und Aufbrechvorrichtung und daran anschließende, das neue Sammlerrohr bildende Rohrabschnitte hydraulisch vorgepreßt werden. Beim Vorpressen des aus der Bohr- und Aufbrechvorrichtung und den Rohrabschnitten bestehenden Rohrstranges wird das alte Sammlerrohr zertrümmert und von einem konisch ausgebildeten Kopf in den umgebenden Boden verdrängt. eine Verdrängung der Scherben oder Bruchstücke des alten Sammlerrohres in das umliegende erdreich kann aber schon dann scheitern, wenn das erdreich nicht genügend nachgiebig ist oder Steine, Bauwerke o. dgl. im Wege liegen. Auch lassen behördliche Vorschriften nicht zu, daß die neuen Sammlerrohre auf Scherben des alten Sammlerrohres zu liegen kommen. Bei einer aus der DE 36 20 026 A1 bekannten Ausführung wird das alte Beton- oder Steinzeugrohr mittels eines von einer Baugrube vorgetriebenen Schürfkopfes zerfräst, mittels einer zugehörigen Brechereinrichtung zerkleinert, das zerkleinerte Gut mittels einer Förderschnecke durch den alten oder neuen Rohrstrang in eine Baugrube abgefördert und ein Verlegerohr vorgetrieben. Die Schürfelemente des von einer Baugrube aus von der Förderschnecke angetriebenen Schürfkopfes sind jedoch, insbesondere bei Betonrohren, einem so hohen Verschleiß ausgesetzt, daß das Gerät nur bedingt einsetzbar ist.

Der Erfindung liegt daher die Aufgabe zugrunde, eine Vorrichtung der gattungsgemäßen Art derart auszubilden, daß eine seitliche Verdrängung der Bruchstücke des alten Sammlerrohres in das umliegende erdreich vermieden wird, der durch den Abbau und die Zerkleinerung des alten Sammlerrohres bedingte Verschleiß erheblich verringert und das gesamte Bohrgut abgefördert wird sowie ein wirtschaftlicher Einsatz möglich ist.

Diese Aufgabe wird durch die im Anspruch 1 genannten Merkmale gelöst.

Der mit den Rollmeißeln ausgerüstete konische Bohrkopf bricht das alte Sammlerrohr auf, wobei die Verwendung von Rollmeißeln fast keinen Verschleiß zur Folge hat. Beim weiteren Vorpressen der Bohrvorrichtung werden die Bruchstücke zusammen mit dem übrigen abgebauten erdreich in den Brecherraum gefördert, wo die Zerkleinerung in so kleine Teilchen erfolgt, daß diese zu einem Abtransport zum Preßschacht mittels hydraulischer Fördermittel oder einer Förderschnecke geeignet sind. Die als exzenterbrecher ausgebildete Brechvorrichtung erzeugt auf sehr wirtschaftliche Weise außerordentlich hohe Kräfte mit denen die Bruchstücke zerkleinert werden. Zur Erlangung dieser Brecherwirkung ist der Drehzapfen der Bohrvorrichtung mit einer Kröpfung versehen, auf der ein Brecherring drehbar gelagert ist, der mit einem im Gehäuse angeordneten Brechermantel einen sichelförmigen Brecherspalt bildet. Das Brechgut gelangt in den breiten Spalt, der beim Umdrehen des Drehzapfens immer schmaler wird, so daß die Bruchstücke zerquetscht werden. Da praktisch alle Bruchstücke des alten Sammlerrohres abgefördert werden, besteht auch nicht die Gefahr, daß die neuen Sammlerrohre auf Scherben des alten Sammlerrohres zu liegen kommen.

Die Bohrvorrichtung wird zweckmäßig über Kabel mit elektrischem Strom für den Drehantrieb des Bohrkopfes versorgt und mit hydraulischen Druckleitungen für die hydraulischen Steuerzylinder und gegebenenfalls mit hydraulischen Transportleitungen zum Austragen des Bohrgutes ausgerüstet.

Die Erfindung ist in der Zeichnung beispielhaft dargestellt; es zeigt
- Fig. 1: einen lotrechten Schnitt durch einen Preßschacht und den Abschnitt eines Sammlerrohres,
- Fig. 2: eine Bohrvorrichtung zum Aufbrechen alter Sammlerrohre in einer Seitenansicht und
- Fig. 3: den Gegenstand der Fig. 2 in einem Querschnitt nach Linie II - II.

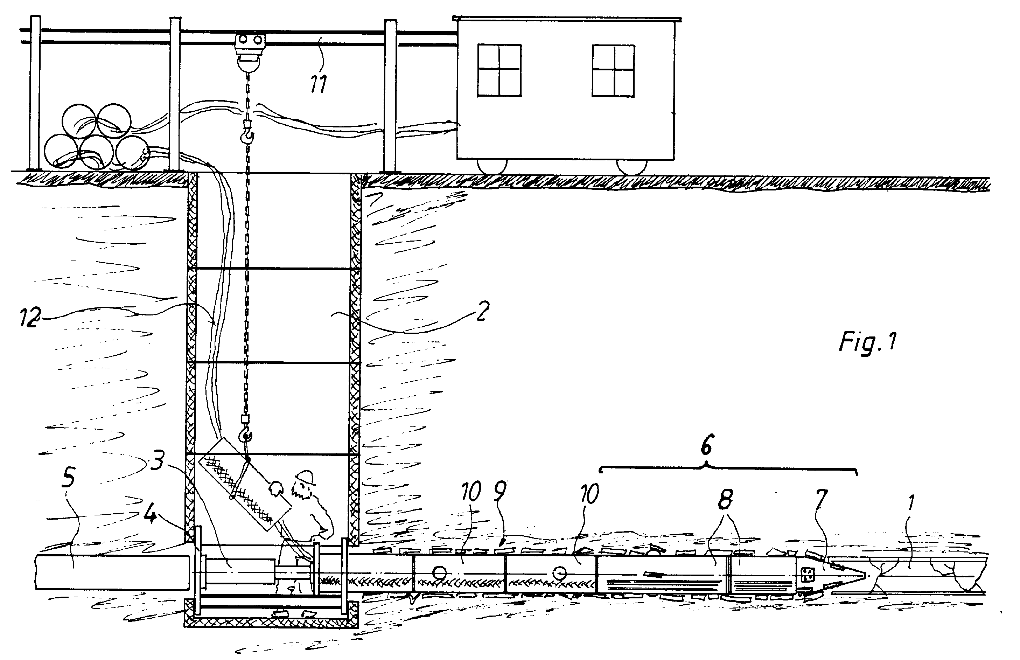

Die Fig. 1 zeigt schematisch, wie ein altes Sammlerrohr 1 mittels einer Bohrvorrichtung 6 aufgebrochen wird und wie Rohrabschnitte 10, die ein neues Sammlerrohr 9 bilden, über einen Preßschacht 2 mittels eines oder mehrerer Preßzylinder 3 vorgepreßt werden. Der Preßzylinder 3 stützt sich an einem Widerlager 4 ab, hinter dem sich ein anderes bereits erneuertes oder altes Sammlerrohr 5 befindet. Zur Bohrvorrichtung 6 gehört ein konischer Bohrkopf 7 und zwei hintereinander liegende rohrförmige Gehäuse 8, in denen sich die Antriebselemente für den konischen Bohrkopf 7 befinden. Die einzelnen Teile der Bohrvorrichtung 6 und die Rohrabschnitte 10 sowie die anderen Hilfsmittel werden mittels einer Kranbrücke 11 in den Preßschacht 2 herabgelassen. Außerdem sind Versorgungskabel 12 angedeutet.

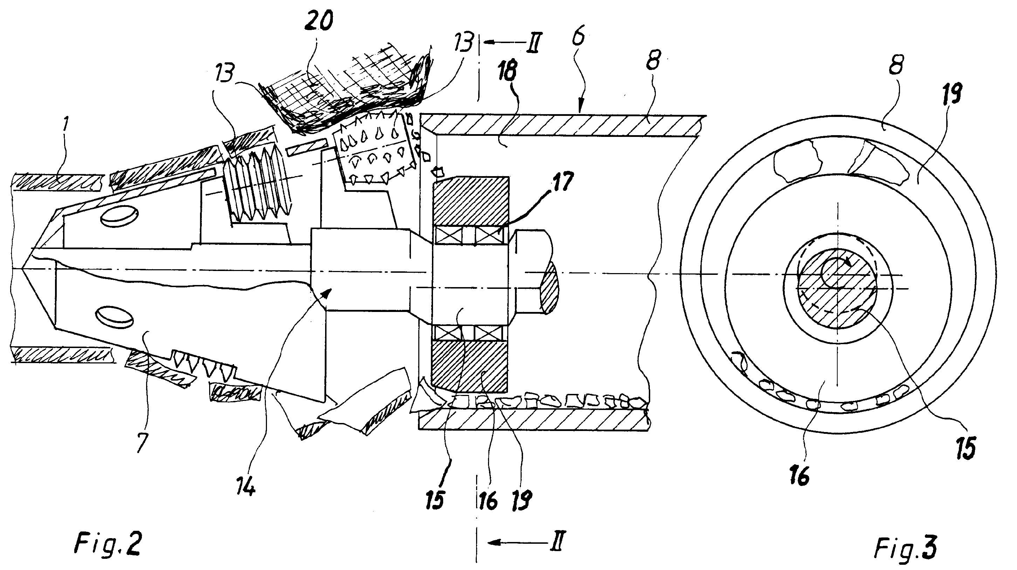

Eine Ausführung einer Bohrvorrichtung 6 ist in Fig. 2 in einem größeren Maßstab dargestellt. Auf dem Mantel des konischen Bohrkopfes 7 sind mehrere, verschiedenartig ausgebildete Rollmeißel 13 angeordnet, die beim Drehen des konischen Bohrkopfes das alte Sammlerrohr 1 aufbrechen. Der konische Bohrkopf 7 ist mit einem Drehzapfen 14 in dem vorderen rohrförmigen Gehäuse 8 der Bohrvorrichtung 6 gelagert. Der Drehantrieb des konischen Bohrkopfes 7 erfolgt über ein Getriebe und einen Motor (in der Zeichnung nicht dargestellt). Das vordere rohrförmige Gehäuse 8 und das darauf folgende rohrförmige Gehäuse 8 sind durch mehrere, auf den Umfang verteilte Steuerzylinder (in der Zeichnung nicht dargestellt) verbunden, mit deren Hilfe das Kopfende samt konischem Bohrkopf 7 und rohrförmigem Gehäuse 8 gegenüber dem nachfolgenden rohrförmigen Gehäuse 8 zur Steuerung ausgelenkt werden kann.

Das neue Sammlerrohr hat einen gegenüber dem alten Sammlerrohr größeren Durchmesser und der Außendurchmesser des rohrförmigen Gehäuses 8 der Bohrvorrichtung 6 entspricht dem Außendurchmesser des neuen Sammlerrohres. Um die Bruchstücke des alten Sammlerrohres 1 und die umliegenden Erdmassen bzw. Steinmassen zu zerkleinern und abzutransportieren, ist der Drehzapfen 14 des konischen Bohrkopfes 7 mit einer Kröpfung 15 versehen, auf der ein Brecherring 16 mittels eines Lagerringes 17 drehbeweglich gelagert ist. Weiterhin ist der Innenmantel des rohrförmigen Gehäuses 8 im Bereich des Brecherringes 16 mit einem Brechermantel 18 versehen. Vorzugsweise bestehen der Brecherring 16 und der Brechermantel 18 aus einem abriebsfesten Werkstoff. Durch die exzentrische Lagerung des Brecherringes 16 auf der Kröpfung 15 wird dieser kreisförmig um die Mittelachse der Bohrvorrichtung 6 geführt. Hierdurch entsteht, wie Fig. 2 zeigt, ein sichelförmiger Brecherspalt 19 zwischen Brecherring 16 und Brechermantel 18. Das relativ grobe Material wird in diesen Brecherspalt 19 gedrängt, der bei der Umdrehung des Drehzapfens 14 ständig verkleinert und wieder vergrößert wird. Beim Verkleinern des Brecherspalts 19 werden die zwischen Brecherring 16 und Brechermantel 18 befindlichen Bruchstükke zerkleinert.

### Bezugszeichenliste

- 1: altes Sammlerrohr
- 2: Preßschacht
- 3: Preßzylinder
- 4: Widerlager
- 5: Anschlußsammlerrohr
- 6: Bohrvorrichtung
- 7: konischer Bohrkopf
- 8: rohrförmiges Gehäuse
- 9: neues Sammlerrohr
- 10: Rohrabschnitte
- 11: Kranbrücke
- 12: Versorgungskabel
- 13: Rollmeißel
- 14: Drehzapfen
- 15: Kröpfung
- 16: Brecherring
- 17: Lagerring
- 18: Brechermantel
- 19: Brecherspalt
- 20: großer Stein

## Patentansprüche

1. Bohrvorrichtung zum unterirdischen Auswechseln schadhafter Abwasser-Sammlerrohre (1) von nicht begehbarem Durchmesser, die am Kopfende eines neuen Sammlerrohres (9) in axialer Richtung gegen das alte Sammlerrohr (1) gepreßt wird und mit einem drehbaren konischen Bohrkopf (7) versehen ist, dadurch gekennzeichnet, daß der an seinem Außenmantel mit Rollmeißeln (13) versehene Bohrkopf (7) über einen Drehzapfen (14) mit einem, in einem unmittelbar an den Bohrkopf (7) angrenzenden rohrförmigen Gehäuse (8) der Bohrvorrichtung (6) angeordneten Getriebemotor verbunden und der Drehzapfen (14) mit einer Kröpfung (15) versehen ist, auf der ein Brecherring (16) drehbar gelagert ist, der mit einem im Gehäuse (8) angeordneten Brechermantel (18) einen sichelförmigen Brecherspalt (19) bildet.

2. Bohrvorrichtung nach Anspruch 1,
dadurch gekennzeichnet, daß ein hydraulisches Fördermittel oder eine Förderschnecke vorgesehen ist, das oder die zwecks Abfördern des zerkleinerten Materials zum Preßschacht innerhalb der Bohrvorrichtung (6) und des Sammlerrohres (9) angeordnet ist.

## Claims

1. A drill for the underground replacement of damaged sewer pipes (1) of non-walk-through diameter, the drill being pressed axially at the front end of a new sewer pipe (9) axially against the old pipe (1), the drill having a rotatable conical drilling head (7), characterised in that the drilling head (7), which has roller bits (13) on its outside generated surface, is connected by way of a pivot pin (14) to a geared motor disposed in a tubular casing (8) of the drill (6), the casing (8) being directly adjacent the drilling head (7), and the pivot pin (14) has a cranked part (15) on which a crusher ring (16) is rotatably mounted, the same co-operating with a crushing envelope (18) in the casing (8) to bound a crescent-shaped crushing gap (19).

2. A drill according to claim 1, characterised in that a hydraulic conveyor or a feed screw is provided which is disposed in the drill (6) and sewer pipe (9) in order to remove the reduced material to the pressing shaft.

## Revendications

1. Dispositif de forage pour éffectuer le remplacement souterrain de collecteurs d'égout endommagés (1) ayant un diamètre qui ne permet pas à un homme d'y passer, le dispositif étant repoussé dans la direction axiale, à l'extrémité de tête d'un collecteur neuf (9), sur l'ancien collecteur (1), et étant équipé d'une tête de forage conique rotative (7), caractérisé par le fait que la tête de forage (7), qui comporte des trépans à molettes (13) sur sa face latérale extérieure, est reliée, par l'intermédiaire d'un tourillon (14), à un moto-réducteur monté dans un carter tubulaire (8) du dispositif de forage (6), qui jouxte directement la tête de forage (7), et que le tourillon (14) a une partie coudée (15), sur laquelle est monté rotatif un anneau de concasseur (16), qui forme, avec une enveloppe de concasseur (18), montée dans le carter (8), une fente de concassage (19) en forme de faucille.

2. Dispositif de forage suivant la revendication 1, caractérisé par le fait qu'il est prévu un moyen hydraulique d'entraînement ou une vis convoyeuse, qui est disposé à l'intérieur du dispositif de forage (6) et du collecteur (9) pour évacuer le matériau broyé en direction du puits de refoulement.
